# EUROPÄISCHE PATENTSCHRIFT

(11) **EP 3 080 225 B1**
(45) Veröffentlichungstag und Bekanntmachung des Hinweises auf die Patenterteilung: **27.02.2019**
(21) Anmeldenummer: 14812182.5
(22) Anmeldetag: 09.12.2014
(51) Int. Cl.: C09J 133/08, C09J 4/06

(54) **WÄSSRIGE KLEBSTOFFZUSAMMENSETZUNG**
AQUEOUS ADHESIVE COMPOSITION
COMPOSITION D'ADHÉSIF AQUEUSE

(30) Priorität: 09.12.2013 DE 102013225275
(43) Veröffentlichungstag der Anmeldung: 19.10.2016
(73) Patentinhaber: Henkel AG & Co. KGaA, 40589 Düsseldorf (DE)
(72) Erfinder: SOMMER, Oliver, 40593 Düsseldorf (DE); KOTTHOFF, Sebastian, 32457 Porta Westfalica (DE); BUJ VILALTA, Victor Dario, 41469 Neuss (DE); ABRAHAMS-MEYER, Ethel, 41747 Viersen (DE)
(86) Internationale Anmeldenummer: PCT/EP2014/076948
(87) Internationale Veröffentlichungsnummer: WO 2015/086545

(56) Entgegenhaltungen:
- EP-A1- 2 033 991
- WO-A1-2011/128400

## Beschreibung

Die vorliegende Anmeldung betrifft wässrige Klebstoffdispersionen auf (Meth)Acrylat-Basis, die als Stabilisator ein teilweise oder vollständig hydrolysiertes Copolymer von mindestens einem Vinylester, vorzugsweise Vinylacetat, mit mindestens einem Alkendiester, vorzugsweise 3,4-Diacetoxy-1-buten, enthalten und die Verwendung derartiger Zusammensetzungen als Etikettierklebstoffe und Siegelklebstoffe.

Wasser-basierte Klebstoffe sind im Stand der Technik als Etikettierklebstoffe bekannt. Üblicherweise werden derartige Klebstoffe auf eine Seite eines Papier- oder Kunststoffetiketts aufgetragen und dieses dann in einem Hochgeschwindigkeitsetikettierverfahren auf einen Behälter geklebt. Aus Gründen der Prozessierbarkeit sind die Behälter, üblicherweise Flaschen, bereits mit Inhalt gefüllt, wenn das Etikett aufgeklebt wird. Da der Inhalt in vielen Fällen gekühlt ist, weisen die Behälter eine äußere Oberfläche auf, deren Temperatur unter der Umgebungstemperatur liegt, was zur Bildung von Kondenswasser auf der Außenseite der Behälter führt. Dieses Kondenswasser ist insbesondere bei den heutzutage verwendeten Hochgeschwindigkeitsetikettierverfahren problematisch, da die Etiketten auf solchen nassen Oberflächen schlecht haften und daher leicht verrutschen. Es ist daher ein generelles Bestreben, Klebstoffe zu entwickeln, die auch auf nassen Oberflächen gute Klebeeigenschaften aufweisen.

Ein weiteres Erfordernis ist, dass bei der Wiederverwertung der Behälter die Etiketten einfach und rückstandsfrei entfernt werden können. Dazu ist es wünschenswert, dass der getrocknete Klebstoff einfach und schnell in Wasser oder alkalischen Lösungen gelöst werden kann.

Um eine gute Verklebung eines Etiketts auf kalten mit Kondenswasser benetzten Flaschen zu erreichen, werden vor allem kaseinbasierte Klebstoffe verwendet. Kasein ist aber als Naturprodukt kostspielig, nicht immer verfügbar und unterliegt starken Qualitätsschwankungen. Allerdings können die vorteilhaften Eigenschaften Kasein-basierter Klebstoffe derzeit mit synthetischen Klebstoffen noch nicht vollständig reproduziert werden.

Im Verpackungsbereich spielen geeignete Siegelklebstoffe eine große Rolle, wobei zur Verpackung temperaturempfindlicher Güter, z.B. Lebensmittel wie Eis oder Schokolade, Kaltsiegelklebstoffe eingesetzt werden. Bei der Herstellung von Blisterverpackungen für Pharmazeutika kommen oftmals Heißsiegelklebstoffe zum Einsatz. Häufig wird dabei auf lösungsmittelbasierte Systeme zurückgegriffen, da diese gute Siegeleigenschaften, Verklebungen und Beständigkeit gegenüber vielen Füllgütern und Umwelteinflüssen aufweisen. Nachteilig ist hierbei allerdings, dass das Arbeiten mit hoch lösemittelhaltigen Stoffen besondere Schutzmaßnahmen erfordert. So müssen Produktionsmitarbeiter durch geeignete Maßnahmen, wie Absauganlagen, vor Lösemitteldämpfen geschützt werden, und aufwändiger Explosions- und Brandschutz im Produktionsbereich vorgesehen sein. Es besteht also auch hier Bedarf an geeigneten wasser-basierten Klebstoffen, die insbesondere gute Siegeleigenschaften aufweisen.

WO 2011/128400 offenbart eine Klebstoffzusammensetzung, bestehend aus einem alkalilöslichen Polymer in einer wässrigen Dispersion und einem Copolymer aus einem Vinylester und einer ungesättigten Carbonsäure. Die Klebstoffzusammensetzung wird für entfernbare Etikette verwendet.

EP 1 672 045 offenbart eine Klebstoffemulsion zur Etikettierung von Flaschen, hergestellt durch Emulsionspolymerisation mindestens eines Acrylsäureesters in Gegenwart eines Stabilisatorsystems, das ein Carbonsäure-Monomereinheiten enthaltendes Polymer enthält.

EP2 284 238 offenbart einen wässrigen Klebstoff mit verbesserter Haftung an nassen Oberflächen, der ein (Meth)acrylat Copolymer enthält.

Der vorliegenden Erfindung liegt daher die Aufgabe zugrunde, einen synthetischen Klebstoff bereitzustellen, der die Eigenschaft hat eine gute Verklebung auf kalten und nassen Flaschen zu erreichen und der daher die gewöhnlich verwendeten Kasein-basierten Klebstoffe ersetzen kann. Weiterhin soll der Klebstoff auch als Siegelklebstoff, insbesondere Kaltsiegelklebstoff eingesetzt werden können.

Überraschenderweise wurde festgestellt, dass dies durch Klebstoffzusammensetzungen erreicht werden kann, die eine Kombination von Acrylatpolymerisaten mit speziellen Schutzkolloiden auf Basis von Polyvinylalkohol enthalten. Handelsüblicher Polyvinylalkohol ist aufgrund der speziellen Chemie nicht für die Anwendung bei der Polymerisation von Acrylatdispersionen geeignet.

Gegenstand der vorliegenden Erfindung sind daher Klebstoffzusammensetzungen, die eine Polymerdispersion basierend auf Acrylat-Monomeren, die durch Polyvinylalkohol-Derivate stabilisiert sind, enthalten. Durch diese spezielle Kombination aus Acrylaten und Polyvinylalkohol-Derivaten sind Klebstoffeigenschaften ähnlich einer Kasein-basierten Rezeptur zu erreichen, ohne die negativen Eigenschaften von Kasein zu beinhalten. Insbesondere lassen sich durch den Verzicht auf Kasein eine deutliche Kostenersparnis und die Sicherstellung einer gleich bleibenden Qualität realisieren. Die neuartigen Klebstoffzusammensetzungen sind ferner lagerstabiler und einfacher zu handhaben als die bekannten Kaseinklebstoffe. Gegenüber bekannten synthetischen Acrylatklebstoffen weisen die erfindungsgemäßen Zusammensetzungen eine verbesserte Haftung auf kalten und nassen Oberflächen auf, d.h. das Verrutschen des Etiketts wird vermieden, und die Abwaschbarkeit ist auch nach Eiswasserlagerung noch sehr gut. Zudem lassen sich ausgezeichnete Heiß- und Kaltsiegeleigenschaften erzielen. So weisen die Klebstoffzusammensetzungen hohe Wasserfestigkeiten und Beständigkeiten gegenüber verschiedensten Füllgütern, wie beispielsweise Ketchup, Joghurt, Eis oder Schokolade auf.

In einem ersten Aspekt richtet sich die vorliegende Erfindung daher auf eine Klebstoffzusammensetzung, wobei die Klebstoffzusammensetzung eine wässrige (Meth)Acrylat-Dispersion ist, die jeweils bezogen auf das Gesamtgewicht der Klebstoffzusammensetzung enthält:
(a) 15,0 bis 55,0 Gew.-%, vorzugsweise 15,0 bis 40,0 Gew.-%, besonders bevorzugt 16,0 bis 25,0 Gew.-% eines Polymerisats auf Basis von (Meth)acrylat-Monomeren; und mindestens einem copolymerisierbaren Hilfsmonomer ausgewählt aus ethylenisch ungesättigten Mono- und Dicarbonsäuren; und
(b) 0,1 bis 5,0 Gew.-%, vorzugsweise 0,4 bis 2,5 Gew.-% eines Stabilisators, wobei der Stabilisator ein Copolymer von mindestens einem Vinylester, vorzugsweise Vinylacetat, mit mindestens einem Alkendiester der Formel

   H₂C=CHR¹-(CHR²)ₙ-CH₂R³

   enthält, wobei mindestens zwei von R¹, R² und R³ -OC(O)R⁴ sind und die übrigen Wasserstoff sind, R⁴ C₁₋₆-Alkyl, vorzugsweise Methyl, ist, und n 0, 1, 2, 3, 4 oder 5 ist, wobei das Copolymer teilweise oder vollständig hydrolysiert ist.

"Mindestens ein", wie hierin verwendet, bezieht sich auf 1 oder mehr, beispielsweise 1, 2, 3, 4, 5, 6, 7, 8, 9 oder mehr.

In einem weiteren Aspekt betrifft die vorliegende Erfindung die Verwendung eines solchen Klebstoffs als Etikettierklebstoff.

Durch den Einsatz des hierin beschriebenen Klebstoffs lässt sich eine sehr gute Verklebung von Etiketten auch auf nassen und kalten Glas- und Plastikoberflächen erreichen. Die Klebewirkung ist insbesondere auch bei niedrigen Temperaturen (Eiswasser) sehr gut. Trotz der hohen Klebekraft lassen sich die Klebstoffe gut abwaschen.

In einem weiteren Aspekt betrifft die vorliegende Erfindung die Verwendung eines solchen Klebstoffs als Siegelklebstoff, insbesondere als Kaltsiegelklebstoff.

Die hierin beschriebenen Klebstoffzusammensetzungen sind wasserbasierte Dispersionen von Polymerisaten auf Acrylatbasis, die mit speziellen Polyvinylalkohol-Derivaten stabilisiert sind.

Die als Schutzkolloide oder Stabilisator eingesetzten Polyvinylalkoholderivate sind Copolymere von mindestens einem Vinylester-Monomer, vorzugsweise Vinylacetat, mit mindestens einem Alkendiester-Monomer der Formel

H₂C=CHR¹-(CHR²)ₙ-CH₂R³

wobei mindestens zwei von R¹, R² und R³-OC(O)R⁴ sind und die übrigen Wasserstoff sind, R⁴ C₁₋₆-Alkyl, vorzugsweise Methyl, ist, und n 0, 1, 2, 3, 4 oder 5 ist. Diese Copolymere sind teilweise oder vollständig hydrolysiert. "Hydrolysiert", wie in diesem Zusammenhang verwendet, bezieht sich darauf, dass die Estergruppen teilweise oder vollständig verseift sind, so dass das Copolymer an diesen Stellen freie Hydroxylgruppen enthält. "Teilweise hydrolysiert" bedeutet, dass einige Estergruppen verseift und andere nicht verseift sind. In den beschriebenen Copolymeren sind die Alkendiester vorzugsweise vollständig zu Diolen verseift. Die Vinylester-Monomere sind ebenfalls vollständig zu Vinylalkohol-Einheiten verseift oder das Copolymer enthält gleichzeitig Vinylalkohol- und Vinylester-Einheiten. Der Hydrolysegrad des Copolymers beträgt in verschiedenen Ausführungsformen 80 bis 95 Mol.-%. Die Höpplerviskosität (DIN 53015, Methode nach Höppler, 4 %-ige wässrige Lösung) beträgt vorzugsweise von 1 bis 30 mPas, vorzugsweise 2 bis 25 mPas.

In verschiedenen Ausführungsformen der Erfindung sind die Copolymere solche, die 50 bis 95 Gew.-% Monomereinheiten auf Basis des mindestens einen Vinylester-Monomers, vorzugsweise Vinylacetat; und 5 bis 50 Gew.-% Monomereinheiten auf Basis des mindestens einen Alkendiester-Monomers, vorzugsweise 3,4-Diacetoxy-1-buten, enthalten. Vorzugsweise enthalten diese Copolymere keine Monomereinheiten auf Basis anderer Monomere, d.h. die Mengen an Monomereinheiten auf Basis des mindestens einen Vinylester-Monomers, und an Monomereinheiten auf Basis des mindestens einen Alkendiester-Monomers addieren sich bevorzugt auf 100 Gew.-%.

Die Copolymere können eine Art von Vinylestermonomer oder auch mehrere verschiedene Arten von Vinylester-Monomeren als Monomereinheiten enthalten. Analog können entweder ein Alkendiester oder mehrere verschiedene Alkendiester als Co-Monomere eingesetzt werden. "Alkendiester", wie hierin verwendet, bezieht sich auf Alkene die zwei veresterte Hydroxygruppen tragen und wieder zu Diolen verseift werden können.

Das Copolymer kann ein Copolymer von Vinylacetat mit einem Alkendiester der Formel

H₂C=CH₂-(CHR²)ₙ-CH₂R³

sein, wobei mindestens zwei von R² und R³-OC(O)CH₃ sind und die übrigen Wasserstoff sind, und n 1, 2, oder 3, vorzugsweise 1, ist. Insbesondere ist das Copolymer ein Butendiol/Vinylalkohol Copolymer (INCI: Butendiol/Vinyl Alcohol Copolymer; CAS: 917249-64-0).

In verschiedenen Ausführungsformen umfasst der Stabilisator bzw. das Schutzkolloid eines oder mehrere verschiedene der oben beschriebenen Copolymere oder besteht daraus. Bevorzugt ist, dass der Stabilisator eines der oben beschriebenen Copolymere ist.

Der Stabilisator ist in Mengen von 0,1 bis 5,0 Gew.-%, vorzugsweise 0,4 bis 2,5 Gew.-%, jeweils bezogen auf die Gesamtklebstoffzusammensetzung enthalten. Unabhängig davon, ob der Klebstoff einen oder mehrere der oben definierten Copolymere enthält, beziehen sich die Mengenangaben auf die Gesamtmenge aller in der Klebstoffzusammensetzung enthaltenen Copolymere der obigen Formel.

Die Klebstoffzusammensetzung enthält ferner ein in Wasser dispergiertes Polymerisat auf Basis von Estern der Acryl- oder Methacrylsäure und gegebenenfalls weiteren damit copolymerisierbaren Monomeren. "Auf Basis von Estern der Acryl- oder Methacrylsäure", wie hierin verwendet, bedeutet, dass das Polymerisat bezogen auf das Gesamtgewicht der Monomere und die Gesamtmenge eventuell weiterer copolymerisierbarer Monomere eine größere Menge an Estern der Acryl- oder Methacrylsäure enthält. In verschiedenen Ausführungsformen beträgt der Anteil der Ester der Acryl- oder Methacrylsäure am Gesamtgewicht der Monomere mindestens 50 Gew.-%.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat, noch bevorzugter Methylmethacrylat und n-Butylacrylat. Das Polymerisat kann einen oder mehrere der vorstehend genannten Ester enthalten. Besonders bevorzugt sind Mischungen von Methylmethacrylat und n-Butylacrylat, insbesondere im Gewichtsverhältnis 1:1. Die Klebstoffzusammensetzung enthält bezogen auf ihr Gesamtgewicht in verschiedenen Ausführungsformen 15,0 bis 40,0 Gew.-%, vorzugsweise 16,0 bis 25,0 Gew.-% (Meth)acrylat-Monomereinheiten in Form des Polymerisats.

Gegebenenfalls können die Methacrylsäureester und Acrylsäureester noch mit weiteren Monomeren copolymerisiert werden, beispielsweise mit einem oder mehreren Monomeren aus der Gruppe der Vinylester von unverzweigten oder verzweigten Carbonsäuren mit 1 bis 12 C-Atomen, der Vinylaromaten, der Vinylhalogenide, der Olefine und Diene. Falls die genannten Monomere copolymerisiert werden, dann im Allgemeinen in einer Menge von 10 bis 50 Gew.-% bezogen auf das Gesamtgewicht der Monomere.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen. Besonders bevorzugt ist Vinylacetat. Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid und Acetylacetoxyethylacrylat oder -methacrylat. Besonders bevorzugt sind allerdings Acryl- und Methacrylsäure sowie Mischungen davon. Derartige Hilfspolymere können in Mengen von 0,5 bis 20,0, vorzugsweise 1,0 bis 15,0, noch bevorzugter 2,0 bis 12,0 Gew.-% bezogen auf das Gesamtgewicht der Klebstoffzusammensetzung in Form des Polymerisats enthalten sein.

Bevorzugt werden Homo- und Copolymerisate, welche ein oder mehrere Monomere aus der Gruppe Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat enthalten, insbesondere Homopolymerisate von n-Butylacrylat oder 2-Ethylhexylacrylat oder Copolymerisate von Methylmethacrylat mit n-Butylacrylat und/oder 2-Ethylhexylacrylat; sowie Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die genannten Homo- und Copolymerisate gegebenenfalls noch die oben genannten Hilfsmonomere enthalten können.

Am meisten bevorzugt werden Copolymerisate von Methylmethacrylat mit n-Butylacrylat, die gegebenenfalls noch die oben genannten Hilfsmonomere, insbesondere Acryl- oder Methacrylsäure, besonders bevorzugt Methacrylsäure enthalten können. In derartigen Polymerisaten sind die Acrylate und Methacrylate bezogen auf das Gesamtgewicht der Monomere im Polymerisat in Mengen von 40,0 bis 90,0 Gew.-%, vorzugsweise 60,0 bis 80,0 Gew.-% enthalten. Die Hilfsmonomere, d.h. insbesondere Acryl- oder Methacrylsäure, sind bezogen auf das Gesamtgewicht der Monomere im Polymerisat in Mengen von 10,0 bis 60,0 Gew.-%, vorzugsweise 20 bis 40 Gew.-% enthalten.

Die Monomerauswahl bzw. die Auswahl der Gewichtsanteile der Comonomere erfolgt dabei so, dass im Allgemeinen eine Glasübergangstemperatur Tg von -50°C bis +50°C, vorzugsweise -30°C bis +40°C resultiert, sofern das Polymer in eine Klebstoffzusammensetzung eingearbeitet wird, die als Siegelklebstoff eingesetzt werden soll. Für den Einsatz als Etikettierklebstoff erfolgt die Monomerauswahl bzw. die Auswahl der Gewichtsanteile der Comonomere vorzugsweise so, dass eine Glasübergangstemperatur Tg von +30°C bis +120°C resultiert. Die Glasübergangstemperatur Tg der Polymerisate wird in bekannter Weise mittels Differential Scanning Calorimetry (DSC) ermittelt.

In verschiedenen Ausführungsformen enthält die Klebstoffzusammensetzung bezogen auf das Gesamtgewicht der Klebstoffzusammensetzung 15,0 bis 55,0 Gew.-%, vorzugsweise 15,0 bis 40,0 Gew.-%, besonders bevorzugt 16,0 bis 25,0 Gew.-% eines Copolymerisats, das wiederum 40,0 bis 89,0 Gew.-%, vorzugsweise 62,5 bis 79,0 Gew.-% (Meth)acrylat-Monomereinheiten, insbesondere Methylmethacrylat- und n-Butylacrylat-Einheiten, und 11,0 bis 60,0 Gew.-%, vorzugsweise 21,0 bis 37,5 Gew.-% (Meth)acrylsäure-Monomereinheiten, insbesondere Methacrylsäure-Einheiten enthält. In einer Ausführungsform enthält das Polymerisat Methylmethacrylat-, n-Butylacrylat- und Methacrylsäure-Monomereinheiten im Massenverhältnis von 0,8-1,2 : 0,8-1,2 : 0,6-1,0, vorzugsweise 1 : 0,9-1,1 : 0,7-0,9. In einer weiteren Ausführungsform enthält das Polymerisat Methylmethacrylat-, n-Butylacrylat- und Acrylsäure-Monomereinheiten im Massenverhältnis von 0,8-1,2 : 1,1-1,5 : 0,01-0,1, vorzugsweise 1 : 1,2-1,4 : 0,01-0,1.

Die Herstellung der Acrylat- bzw. Methacrylat Homo- oder Copolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im Allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0,001 bis 0,7 Gew.-%, vorzugsweise 0,001 bis 0,5 Gew.-% jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 0,5 Gew.-% jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert-Dodecylmercaptan, Mercaptopropionsäure, Mercaptopropionsäuremethylester, Isopropanol und Acetaldehyd. Vorzugsweise wird n-Dodecylmercaptan, beispielsweise in einer Menge von 1,0 bis 2,0 Gew.-% bezogen auf die zu polymerisierenden Monomere eingesetzt.

Bei der Polymerisation werden die oben beschriebenen Schutzkolloide auf Polyvinylalkohol-Basis in den beschriebenen Mengen vorzugsweise als wässrige Lösung vollständig vorgelegt, bzw. teilweise vorgelegt und teilweise zudosiert. Vorzugsweise werden mindestens 5 Gew.-% des Schutzkolloids vorgelegt, am meisten bevorzugt wird der Schutzkolloid-Anteil vollständig vorgelegt.

In bestimmten Ausführungsformen kann es von Vorteil sein noch zusätzlich kleine Mengen an Emulgatoren einzusetzen, gegebenenfalls 0,1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten. Durch die Gegenwart der oben beschriebenen Schutzkolloide auf Polyvinylalkohol-Basis ist es jedoch nicht erforderlich, zusätzliche Emulgatoren einzusetzen. In einer bevorzugten Ausführungsform wird daher kein weiterer Emulgator zugegeben.

Die Monomere, d.h. die (Meth)acrylat-Monomere und gegebenenfalls verwendete Co- oder Hilfsmonomere, können insgesamt zudosiert werden oder in Anteilen vorgelegt werden und der Rest nach der Initiierung der Polymerisation zudosiert werden. Die Monomere werden vorzugsweise in Form einer wässrigen Pre-Emulsion eingesetzt, die zusätzlich auch Regler und Emulgatoren (Tenside) enthalten kann. Vorzugsweise wird so vorgegangen, dass die Schutzkolloide auf Polyvinylalkohol-Basis in den beschriebenen Mengen vorzugsweise als wässrige Lösung vollständig vorgelegt werden, wobei die Lösung erwärmt werden kann, beispielsweise auf 70 bis 80°C, woraufhin 1 bis 10 Gew.-%, bezogen auf das Gesamtgewicht der Monomere, der Monomer-Pre-Emulsion zudosiert wird. Nach Zugabe einer Initiatorvorlage wird der Rest der Monomere im Allgemeinen innerhalb von 3-4 Stunden zudosiert. Die Dosierungen können separat (räumlich und zeitlich) durchgeführt werden oder die zu dosierenden Komponenten können alle oder teilweise voremulgiert, d.h. in Form der oben beschriebenen Pre-Emulsion, dosiert werden.

Der Monomerumsatz wird mit der Initiatordosierung gesteuert. Die Initiatoren werden insgesamt zudosiert, wobei zur Einstellung der Umsatzraten in der ersten Phase der Polymerisation ein Teil des Initiators, beispielsweise 5 bis 10 Gew.-%, als Startervorlage eindosiert und der Rest im Folgenden konstant über einen Zeitraum von 3-4 h zudosiert wird. Alternativ kann die Initiatordosierung zu Beginn der Polymerisation relativ langsam und in der Endphase der Polymerisation mit deutlich erhöhter Dosierrate ausgeführt werden.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit den beschriebenen Verfahren erhältlichen wässrigen Dispersionen und entsprechenden Klebstoffzusammensetzungen haben vorzugsweise einen Feststoffgehalt von 30 bis 75 Gew.-%. In verschiedenen Ausführungsformen enthalten sie 30 bis 70, vorzugsweise 40 bis 70, noch bevorzugter 50 bis 70 Gew.-% Wasser. Bevorzugt sind sie frei von organischen Lösungsmitteln.

Zur Verbesserung der anwendungstechnischen Eigenschaften können den Dispersionen weitere Zusätze zugegeben werden. Weitere, in bevorzugten Ausführungsformen enthaltene, Bestandteile von Klebstoffdispersionen sind beispielsweise Pigmente, Füllstoffe, Farbstoffe, Entschäumer und Konservierungsmittel.

Die wässrigen Polymerdispersionen können mit bekannten Verfahren getrocknet werden, um in Wasser redispergierbare, schutzkolloidstabilisierten Polymerpulver zu erhalten.

Die Dispersionen oder Pulver können in den dafür typischen Anwendungsbereichen eingesetzt werden. Im Sinne der vorliegenden Erfindung werden sie bevorzugt als Klebstoffe, ganz besonders bevorzugt als Etikettierklebstoffe oder Siegelklebstoffe eingesetzt. Die Verwendung als Klebstoff, insbesondere als Etikettierklebstoff oder Siegelklebstoff ist somit ebenfalls Bestandteil der Erfindung.

Dabei wird die Viskosität der Klebstoffzusammensetzungen für den Fall, dass diese als Etikettierklebstoff eingesetzt werden sollen, vorzugsweise so eingestellt, dass sie von 10000 bis 250000 mPas, vorzugsweise von 30000 bis 150000 mPas (25 °C, Brookfield, EN ISO 2555) beträgt. Ist eine Anwendung als Siegelklebstoff beabsichtigt, wird die Viskosität vorzugsweise so eingestellt, dass sie von 50 bis 6000 mPas, vorzugsweise von 100 bis 2000 mPas (25 °C, Brookfield, EN ISO 2555) beträgt. In alternativen Anwendungsformen, insbesondere solchen für Kunststoffoberflächen, beträgt der Viskositätsbereich vorzugsweise 10000 bis 100000 mPas.

Die Anwendung von Klebstoffzusammensetzungen gemäß der Erfindung ist bekannt. Beim Einsatz als Etikettierklebstoff wird die Zusammensetzung insbesondere auf eine Seite eines Etiketts aufgetragen und dieses direkt danach auf einen Behälter, üblicherweise einen mit einer feuchten oder nassen Oberfläche, geklebt. Vorrichtungen für solche Etikettierverfahren sind dem Fachmann bekannt.

Die Klebstoffdispersionen der Erfindung werden üblicherweise in Mengen von 5 bis 80 g/m² vorzugsweise von 5 bis 50 g/m² aufgetragen. Die Etiketten schließen bekannte Materialien, insbesondere Papier ein. Die beklebten Substrate sind Behälter die zur Verpackung von Nahrungsmitteln und Getränken eingesetzt werden, wie Flaschen, Dosen und ähnliche. Das Material des Behälters kann Glas, Metall, Polymer, vielschichtiges Verpackungsmaterial oder ähnliches sein. Vorzugsweise werden Flaschen und Dosen für Getränke als Behälter eingesetzt. Nach Aufbringen des Etiketts werden die Behälter weiterverarbeitet und schließlich getrocknet.

Die Wirkung der erfindungsgemäßen Zusammensetzungen ist die verbessere Klebewirkung auf nassen oder feuchten Oberflächen, sowie die Eignung als Siegelklebstoff. Etiketten, die mit handelsüblichen Klebstoffen verklebt werden, neigen auf feuchten Oberflächen zum Verrutschen, wohingegen beim Aufkleben mit den beschriebenen Klebstoffen die Klebewirkung verbessert ist und daher ein Verrutschen vermieden wird.

Die Etiketten können durch das Eintauchen des Behälters in Wasser, vorzugsweise eine alkalische Lösung, wieder abgelöst werden. Das wird typischerweise bei einer erhöhten Temperatur von 40 bis 95°C, vorzugsweise mehr als 50°C durchgeführt. Die Lösung oder der Behälter wird dabei geschüttelt, so dass der Ablösevorgang durch die mechanische Krafteinwirkung unterstützt wird. Dabei wird der Klebstoff zumindest teilweise aufgelöst und von der Oberfläche des Trägers entfernt.

Die nachfolgenden Beispiele dienen der weiteren Erläuterung der Erfindung:

### Beispiele

### Beispiel 1:

**Tabelle 1: Herstellung Klebstoffdispersion (Etikettierklebstoff)**

| **REAKTOR** | Menge (g) |
|---|---|
| Wasser | 383,25 |
| Butendiol/Vinylalkohol Copolymer | 60,00 |
| | |

| **PRE-EMULSION** | |
|---|---|
| Wasser | 574,71 |
| Anionisches Tensid (35%) | 20,00 |
| Laurylmercaptan | 10,00 |
| n-Butylacrylat | 280,00 |
| Methylmethacrylat | 280,00 |
| Methacrylsäure | 220,00 |
| | |

| **INITIATOR-VORLAGE** | |
|---|---|
| Wasser | 13,59 |
| Kaliumperoxodisulfat | 0,27 |
| | |

| **STARTER (kontinuierlich)** | |
|---|---|
| Wasser | 144,95 |
| Kaliumperoxodisulfat | 3,53 |
| | |
| Konservierungsmittel | 4,80 |
| | |
| Entschäumer | 0,36 |
| Wasser | 4,53 |

Aus Wasser und dem Polyvinylalkoholderivat wurde im Reaktor eine Lösung hergestellt. Diese wurde auf 75°C erhitzt. 5% der Pre-Emulsion wurde hinzugegeben. Nach Zugabe der Initiatorvorlage stieg die Temperatur an. Bei 82°C wurde der Rest der Pre-Emulsion über einen Zeitraum von 3,5 h konstant zugegeben. Gleichzeitig wurde der Starter kontinuierlich über einen Zeitraum von 3,75 h konstant zudosiert. Nach Abkühlung erfolgte die Zugabe von Konservierungsmittel und Entschäumer.

### Beispiel 2:

**Tabelle 2: Herstellung Klebstoffdispersion (Siegelklebstoff)**

| **REAKTOR** | Menge (g) |
|---|---|
| Wasser | 477,97 |
| Butendiol/Vinylalkohol Copolymer | 8,00 |
| | |

| **PRE-EMULSION** | |
|---|---|
| Wasser | 400,00 |
| Anionisches Monomer | 8,00 |
| Laurylmercaptan | 5,00 |
| n-Butylacrylat | 520,00 |
| Methylmethacrylat | 400,00 |
| Acrylsäure | 25,00 |
| Butendiol/Vinylalkohol Copolymer | 8,00 |
| | |

| **INITIATOR-VORLAGE** | |
|---|---|
| Wasser | 9,44 |
| Natriumperoxodisulfat | 0,99 |
| | |

| **STARTER (kontinuierlich)** | |
|---|---|
| Wasser | 130,00 |
| Natriumperoxodisulfat | 2,80 |
| | |
| Konservierungsmittel | 4,80 |

Aus Wasser und dem Polyvinylalkoholderivat wurde im Reaktor eine Lösung hergestellt. Diese wurde auf 75°C erhitzt. 2% der Pre-Emulsion wurde hinzugegeben. Nach Zugabe der Initiatorvorlage stieg die Temperatur an. Bei 77°C wurde der Rest der Pre-Emulsion über einen Zeitraum von 2,5 h konstant zugegeben. Gleichzeitig wurde der Starter kontinuierlich über einen Zeitraum von 3 h konstant zudosiert. Nach Abkühlung erfolgte die Zugabe des Konservierungsmittels.

## Patentansprüche

1. Klebstoffzusammensetzung, **dadurch gekennzeichnet, dass** die Klebstoffzusammensetzung eine wässrige (Meth)Acrylat-Dispersion ist, die jeweils bezogen auf das Gesamtgewicht der Klebstoffzusammensetzung enthält:
(a) 15,0 bis 55,0 Gew.-% eines Polymerisats auf Basis von (Meth)acrylat-Monomeren und mindestens einem copolymerisierbaren Hilfsmonomer ausgewählt aus der Gruppe bestehend aus ethylenischen ungesättigten Mono- und Dicarbonsäuren; und
(b) 0,1 bis 5,0 Gew.-% eines Stabilisators, wobei der Stabilisator ein Copolymer auf Basis von mindestens einem Vinylester, vorzugsweise Vinylacetat, und mindestens einem Alkendiester der Formel
H₂C=CHR¹-(CHR²)ₙ-CH₂R³
enthält, wobei mindestens zwei von R¹, R² und R³ -OC(O)R⁴ sind und die übrigen Wasserstoff sind, R⁴ C₁₋₆-Alkyl, vorzugsweise Methyl, ist, und n 0, 1, 2, 3, 4 oder 5 ist, wobei das Copolymer teilweise oder vollständig hydrolysiert ist.

2. Klebstoffzusammensetzung nach Anspruch 1, **dadurch gekennzeichnet, dass** der Stabilisator ein teilweise oder vollständig, vorzugsweise teilweise, hydrolysiertes Copolymer enthält, das bezogen auf das Gesamtgewicht des Copolymers enthält:
(a) 50 bis 95 Gew.-% Monomer-Einheiten auf Basis des mindestens einen Vinylesters, vorzugsweise Vinylacetat; und
(b) 5 bis 50 Gew.-% Monomer-Einheiten auf Basis des mindestens einen Alkendiesters, vorzugsweise 3,4-Diacetoxy-1-buten.

3. Klebstoffzusammensetzung nach mindestens einem der Ansprüche 1 bis 2, **dadurch gekennzeichnet, dass** der Stabilisator ein Copolymer von Vinylacetat mit einem Alkendiester der Formel
H₂C=CH₂-(CHR²)ₙ-CH₂R³
enthält, wobei mindestens zwei von R² und R³-OC(O)CH₃ sind und die übrigen Wasserstoff sind, und n 1, 2, oder 3, vorzugsweise 1, ist, wobei das Copolymer teilweise oder vollständig, vorzugsweise teilweise, hydrolysiert ist.

4. Klebstoffzusammensetzung nach mindestens einem der Ansprüche 1 bis 3, **dadurch gekennzeichnet, dass** das Copolymer ein Butendiol/Vinylalkohol Copolymer ist.

5. Klebstoffzusammensetzung nach mindestens einem der Ansprüche 1 bis 4, **dadurch gekennzeichnet, dass** das Copolymer einen Hydrolysegrad von 80 bis 95 Mol % aufweist.

6. Klebstoffzusammensetzung nach mindestens einem der Ansprüche 1 bis 5, **dadurch gekennzeichnet, dass** das Polymerisat auf Basis von (Meth)acrylat-Monomeren jeweils bezogen auf das Gesamtgewicht des Polymerisats enthält:
(a) 40,0 bis 89,0 Gew.-%, vorzugsweise 62,5 bis 79,0 Gew.-% (Meth)acrylat-Monomereinheiten; und
(b) 11,0 bis 60,0 Gew.-%, vorzugsweise 21,0 bis 37,5 Gew.-% (Meth)acrylsäure-Monomereinheiten.

7. Klebstoffzusammensetzung nach Anspruch 6, **dadurch gekennzeichnet, dass**
(i) die (Meth)acrylat-Monomere ausgewählt werden aus Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat und Mischungen davon, vorzugsweise einer Mischung von Methylmethacrylat und n-Butylacrylat; und/oder
(ii) die (Meth)acrylsäure-Monomere ausgewählt werden aus Acrylsäure, Methacrylsäure und Mischungen davon, vorzugsweise Methacrylsäure.

8. Klebstoffzusammensetzung nach mindestens einem der Ansprüche 1 bis 7, **dadurch gekennzeichnet, dass** das Polymerisat auf Basis von (Meth)acrylat-Monomeren ein Polymerisat von Methylmethacrylat, n-Butylacrylat und Methacrylsäure ist, wobei die genannten Monomere vorzugsweise in einem Gewichtsverhältnis von 1 : 0,9-1,1 : 0,7-0,9 vorliegen.

9. Klebstoffzusammensetzung nach mindestens einem der Ansprüche 1 bis 7, **dadurch gekennzeichnet, dass** das Polymerisat auf Basis von (Meth)acrylat-Monomeren ein Polymerisat von Methylmethacrylat, n-Butylacrylat und Acrylsäure ist, wobei die genannten Monomere vorzugsweise in einem Gewichtsverhältnis von 0,8-1,2 : 1,1-1,5 : 0,01-0,1 vorliegen.

10. Klebstoffzusammensetzung nach mindestens einem der Ansprüche 1 bis 9, **dadurch gekennzeichnet, dass** die Klebstoffzusammensetzung
(i) 30 bis 70, vorzugsweise 40 bis 70, noch bevorzugter 50 bis 70 Gew.-% Wasser enthält; und/oder
(ii) weitere Hilfs- oder Zusatzstoffe enthält, vorzugsweise ausgewählt aus der Gruppe bestehend aus Entschäumern, Konservierungsmitteln, Farbstoffen und Pigmenten.

11. Verwendung einer Klebstoffzusammensetzung nach mindestens einem der Ansprüche 1 bis 10 als Etikettierklebstoff oder Siegelklebstoff.

## Claims

1. An adhesive composition, **characterized in that** the adhesive composition is an aqueous (meth)acrylate dispersion which contains, based in each case on the total weight of the adhesive composition:
(a) 15.0 to 55.0 wt.% of a polymerizate based on (meth)acrylate monomers and at least one copolymerizable auxiliary monomer selected from the group consisting of ethylenically unsaturated mono- and dicarboxylic acids; and
(b) 0.1 to 5.0 wt.% of a stabilizer, the stabilizer containing a copolymer based on at least one vinyl ester, preferably vinyl acetate, and at least one alkene diester of the formula
H₂C=CHR¹-(CHR²)ₙ-CH₂R³
in which at least two of R¹, R² and R³ are -OC(O)R⁴ and the remainder are hydrogen, R⁴ is C₁₋₆ alkyl, preferably methyl, and n is 0, 1, 2, 3, 4 or 5, the copolymer being partially or completely hydrolyzed.

2. The adhesive composition according to claim 1, **characterized in that** the stabilizer contains a partially or completely, preferably partially, hydrolyzed copolymer which contains, based on the total weight of the copolymer:
(a) 50 to 95 wt.% monomer units based on the at least one vinyl ester, preferably vinyl acetate; and
(b) 5 to 50 wt.% monomer units based on the at least one alkene diester, preferably 3,4-diacetoxy-1-butene.

3. The adhesive composition according to at least one of claims 1 to 2, **characterized in that** the stabilizer contains a copolymer of vinyl acetate with an alkene diester of the formula
H₂C=CH₂-(CHR²)ₙ-CH₂R³
in which at least two of R² and R³ are -OC(O)CH₃ and the remainder are hydrogen, and n is 1, 2 or 3, preferably 1, the copolymer being partially or completely, preferably partially, hydrolyzed.

4. The adhesive composition according to at least one of claims 1 to 3, **characterized in that** the copolymer is a butene diol/vinyl alcohol copolymer.

5. The adhesive composition according to at least one of claims 1 to 4, **characterized in that** the copolymer has a degree of hydrolysis of from 80 to 95 mol.%.

6. The adhesive composition according to at least one of claims 1 to 5, **characterized in that** the polymerizate based on (meth)acrylate monomers contains, based in each case on the total weight of the polymerizate:
(a) 40.0 wt.% to 89.0 wt.%, preferably 62.5 wt.% to 79.0 wt.%, (meth)acrylate monomer units; and
(b) 11.0 wt.% to 60.0 wt.%, preferably 21.0 wt.% to 37.5 wt.%, (meth)acrylic acid monomer units.

7. The adhesive composition according to claim 6, **characterized in that**
(i) the (meth)acrylate monomers are selected from methyl acrylate, methyl methacrylate, ethyl acrylate, ethyl methacrylate, propyl acrylate, propyl methacrylate, n-butyl acrylate, n-butyl methacrylate, 2-ethylhexyl acrylate and mixtures thereof, preferably a mixture of methyl methacrylate and n-butyl acrylate; and/or
(ii) the (meth)acrylic acid monomers are selected from acrylic acid, methacrylic acid and mixtures thereof, preferably methacrylic acid.

8. The adhesive composition according to at least one of claims 1 to 7, **characterized in that** the polymerizate based on (meth)acrylate monomers is a polymerizate of methyl methacrylate, n-butyl acrylate and methacrylic acid, said monomers being present preferably in a weight ratio of 1:0.9-1.1:0.7-0.9.

9. The adhesive composition according to at least one of claims 1 to 7, **characterized in that** the polymerizate based on (meth)acrylate monomers is a polymerizate of methyl methacrylate, n-butyl acrylate and acrylic acid, said monomers being present preferably in a weight ratio of 0.8-1.2:1.1-1.5:0.01-0.1.

10. The adhesive composition according to at least one of claims 1 to 9, **characterized in that** the adhesive composition
(i) contains 30 to 70, preferably 40 to 70, more preferably 50 to 70 wt.% water; and/or
(ii) contains additional auxiliary agents or additives, preferably selected from the group consisting of antifoaming agents, preservatives, dyes and pigments.

11. The use of an adhesive composition according to at least one of claims 1 to 10 as a labeling adhesive or sealing adhesive.

## Revendications

1. Composition d'adhésif **caractérisée en ce que** la composition d'adhésif est une dispersion aqueuse d'acrylate (ou de méthacrylate) contenant, dans chaque cas par rapport au poids total de la composition d'adhésif :
(a) de 15,0 à 55,0 % en poids d'un polymérisat à base de monomères d'acrylate (ou de méthacrylate) et d'au moins un monomère auxiliaire copolymérisable choisi dans le groupe constitué par les acides mono- et dicarboxyliques à insaturation éthylénique ; et
(b) de 0,1 à 5,0 % en poids d'un stabilisant, ledit stabilisant contenant un copolymère à base d'au moins un ester de vinyle, de préférence d'acétate de vinyle, et d'au moins un diester d'alcène de formule
H₂C=CHR¹-(CHR²)ₙ-CH₂R³
où au moins deux parmi R¹, R² et R³ sont -OC(O)R⁴ et les autres sont des atomes d'hydrogène ; R⁴ est un radical alkyle en C₁ à C₆, de préférence méthyle ; et n est égal à 0, 1, 2, 3, 4 ou 5, le copolymère étant partiellement ou totalement hydrolysé.

2. Composition d'adhésif selon la revendication 1, **caractérisée en ce que** le stabilisant contient un copolymère partiellement ou totalement hydrolysé, et de préférence partiellement hydrolysé, qui contient, par rapport au poids total du copolymère :
(a) de 50 à 95 % en poids d'unités monomères à base d'au moins un ester de vinyle, de préférence l'acétate de vinyle ; et
(b) de 5 à 50 % en poids d'unités monomères à base d'au moins un diester d'alcène, de préférence le 3,4-diacétoxy-1-butène.

3. Composition d'adhésif selon au moins l'une des revendications 1 à 2, **caractérisée en ce que** le stabilisant contient un copolymère d'acétate de vinyle avec un diester d'alcène de formule
H₂C=CH₂-(CHR²)ₙ-CH₂R³
où au moins deux parmi R² et R³ sont -OC(O)CH₃ et les autres sont des atomes d'hydrogène, n est égal à 1, 2 ou 3, et de préférence égal à 1, le copolymère étant partiellement ou totalement hydrolysé, et de préférence partiellement hydrolysé.

4. Composition d'adhésif selon au moins l'une des revendications 1 à 3, **caractérisée en ce que** le copolymère est un copolymère de butènediol / alcool vinylique.

5. Composition d'adhésif selon au moins l'une des revendications 1 à 4, **caractérisée en ce que** le copolymère présente un degré d'hydrolysation situé dans la plage allant de 80 à 95 % en moles.

6. Composition d'adhésif selon au moins l'une des revendications 1 à 5, **caractérisée en ce que** le polymérisat à base de monomères d'acrylate (ou de méthacrylate) contient, dans chaque cas par rapport au poids total du polymérisat :
(a) de 40,0 à 89,0 % en poids, de préférence de 62,5 à 79,0 % en poids d'unités monomères d'acrylate (ou de méthacrylate) ; et
(b) de 11,0 à 60,0 % en poids, de préférence de 21,0 à 37,5 % en poids d'unités monomères d'acide acrylique (ou d'acide méthacrylique).

7. Composition d'adhésif selon la revendication 6, **caractérisée en ce que**
(i) les monomères d'acrylate (ou de méthacrylate) sont choisis parmi l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle et leurs mélanges, de préférence un mélange de méthacrylate de méthyle et d'acrylate de n-butyle ; et/ou
(ii) les monomères d'acide acrylique (ou d'acide méthacrylique) sont choisis parmi l'acide acrylique, l'acide méthacrylique et leurs mélanges, de préférence l'acide méthacrylique.

8. Composition d'adhésif selon au moins l'une des revendications 1 à 7, **caractérisée en ce que** le polymérisat à base de monomères d'acrylate (ou de méthacrylate) est un polymérisat de méthacrylate de méthyle, d'acrylate de n-butyle et d'acide méthacrylique, les monomères cités étant de préférence présents dans un rapport en poids de 1 : 0,9-1,1 : 0,7-0,9.

9. Composition d'adhésif selon au moins l'une des revendications 1 à 7, **caractérisée en ce que** le polymérisat à base de monomères d'acrylate (ou de méthacrylate) est un polymérisat de méthacrylate de méthyle, d'acrylate de n-butyle et d'acide acrylique, les monomères cités étant de préférence présents dans un rapport en poids de 0,8-1,2 : 1,1-1,5 : 0,01-0,1.

10. Composition d'adhésif selon au moins l'une des revendications 1 à 9, **caractérisée en ce que** la composition d'adhésif
(i) contient de 30 à 70 % en poids, de préférence de 40 à 70 % en poids, et de façon davantage préférée de 50 à 70 % en poids d'eau ; et/ou
(ii) contient d'autres adjuvants ou additifs, de préférence choisis dans le groupe constitué par les agents antimousse, les conservateurs, les colorants et les pigments.

11. Utilisation d'une composition d'adhésif selon au moins l'une des revendications 1 à 10 en tant qu'adhésif d'étiquetage ou adhésif de cachetage.
